## Europäisches Patentamt

## European Patent Office

## Office européen des brevets

(19)

(11) Numéro de publication: **0 181 361**
**B1**

(12)

# FASCICULE DE BREVET EUROPÉEN

(45) Date de publication du fascicule du brevet:
**02.08.89**

(51) Int. Cl.⁴: **G 01 N 25/72**

(21) Numéro de dépôt: **85902054.7**

(22) Date de dépôt: **24.04.85**

(86) Numéro de dépôt international:
**PCT/FR 85/00093**

(87) Numéro de publication internationale:
**WO 85/04956 (07.11.85 Gazette 85/24)**

(54) **PROCEDE DE DETECTION ET D'ENREGISTREMENT DES DEFAUTS SUR SEMI-PRODUITS SIDERURGIQUES CHAUDS.**

(30) Priorité: **24.04.84 FR 8406759**

(43) Date de publication de la demande:
**21.05.86 Bulletin 86/21**

(45) Mention de la délivrance du brevet:
**02.08.89 Bulletin 89/31**

(84) Etats contractants désignés:
**BE DE GB IT LU NL SE**

(56) Documents cité:
**EP-A-0 153 565**
**BE-A-833 244**
**FR-A-2 381 304**
**US-A-2 260 186**
**US-A-4 215 562**
**US-A-4 219 844**
**US-A-4 247 306**

(73) Titulaire: **SOMAFER S.A., 41, route de Ranguevaux, F-57290 Fameck (FR)**

(72) Inventeur: **DETRONDE, Michel, 24, jardin de Casenove, F-54700 Maidières (FR)**

(74) Mandataire: **Shaw, Laurence Patent & Trademark Agent, George House George Road, Birmingham B15 1PG (GB)**

EP 0 181 361 B1

## Description

La présente invention est relative à un procédé de détection et d'enregistrement des défauts sur semi-produits sidérurgiques chauds.

Les semi-produits sidérurgiques tels que brames, blooms, billettes en acier, par exemple, qu'ils soient obtenus à partir d'une coulée en lingots ou d'une coulée continue, sont généralement transformés en produits plats par laminage à chaud.

Dans un souci permanent d'économiser l'énergie et de diminuer ses coûts de production, le sidérurgiste cherche à bénéficier au maximum de la chaleur du semi-produit sortant de la coulée pour effectuer cette opération de laminage.

Cependant, les semi-produits peuvent présenter au voisinage de leurs surfaces des défauts, visibles ou non, du type fissure, crique, repli ou autre qui risquent de subsister sur les produits laminés ou même de s'amplifier et d'entraîner ainsi leur rebut, sans parler d'un éventuel endommagement de la surface des cylindres du laminoir.

C'est pourquoi, il s'avère nécessaire, avant de procéder audit laminage, d'examiner les semi-produits pour savoir s'ils peuvent être laminés directement ou s'ils doivent être préalablement traités pour supprimer ou réparer les défauts qu'ils présentent, ou encore, si leur qualité est à ce point mauvaise qu'il y a lieu de les recycler.

Jusqu'à présent, cet examen de détection des défauts, en raison du procédé utilisé et du matériel mis en oeuvre, nécessitait un refroidissement préalable du semi-produit; ce qui allait à l'encontre du souci du sidérurgiste d'économiser l'énergie.

C'est pourquoi, des études ont été entreprises par les sidérurgistes, tant en Europe qu'aux Etats-Unis et au Japon, pour trouver une méthode capable de permettre à la fois la détection des défauts à chaud, et leur réparation, et telle qu'elle puisse éventuellement s'insérer dans la chaîne des opérations de coulée et de laminage, de manière à réaliser un procédé entièrement continu.

Comme les semi-produits sont chauds, l'homme ne peut plus les examiner directement. Toutes les études entreprises à ce jour ont donc été basées sur le principe de l'établissement à distance d'une image des défauts qui servira ensuite de guide à une réparation automatique de ces derniers.

Pour appliquer ce principe, toute une série de procédés plus ou moins sophistiqués ont été conçus qui diffèrent, tant par les moyens d'obtention de l'image que par les moyens d'enregistrement de cette image et les moyens d'utilisation de cet enregistrement pour effectuer la réparation des semi-produits.

Mais ces procédés, outre le fait qu'ils nécessitent une mise au point longue et difficile, présentent généralement des inconvénients, notamment au niveau de la détection des défauts. En effet, l'image obtenue n'est pas le reflet de ce que pourrait voir un observateur mais, le plus souvent, une collecte de points établie à partir des caractéristiques physiques qui sont sensées représenter la "santé" des semi-produits. De ce fait, il est pratiquement impossible pour l'observateur de faire la distinction entre les points correspondant réellement à l'état des semi-produits et les points aberrants résultant de perturbations dans la transmission de signaux issus de ces caractéristiques; la faculté d'interprétation et de jugement de l'homme se trouve ainsi pratiquement annihilée. L'enregistrement de telles images et leur utilisation par le réparateur peuvent alors conduire à des semi-produits impropres au laminage.

Chacun de ces procédés présente également des déficiences spécifiques. Ainsi, par exemple, suivant le type de détection utilisé, on observe que:

- la caméra et la télévision infrarouge donnent des images perturbées par la présence de poudres de lubrification des lingotières, de taches d'oxydation, d'irrégularités de surface dues à l'oscillation des lingotières, ce qui rend l'analyse difficile. De plus, ces systèmes ne donnent aucune indication sur la profondeur des défauts,

- la télévision et les courants de Foucault permettent de visualiser des défauts en profondeur mais sur de petites longueurs seulement (1 à 5 mm),

- les systèmes électromagnétiques et ultrasonores sont sensibles aux transformations métallurgiques au voisinage due point de Curie (600 à 700 C) qui perturbent la transmission des ondes et conduisent à des effets parasités. D'autre part, ils nécessitent une désoxydation préalable de la surface des semi-produits pour permettre un couplage hydraulique transducteur-acier convenable.

- les systèmes par préchauffage à induction et détection infrarouge, donnent des résultats qui sont conditionnés par l'angle des défauts par rapport à l'axe de mesure car les défauts transversaux ou présentant des angles inférieurs à 15 degrés par rapport à l'axe transversal sont mal détectes.

Face aux problèmes posés par chacune de ces techniques, la demanderesse a cherché et mis au point un procédé mettant en oeuvre des moyens de détection relativement simples qui conduisent à une image reflétant réellement et très fidèlement la macrostructure de surface des semi-produits et à partir de laquelle l'opérateur peut continuer à jouer son rôle d'observateur et d'interprète des défauts comme il le faisait jusqu'à présent pour l'examen des semi-produits froids.

A ces moyens de détection, la demanderesse a combiné des moyens d'enregistrement de l'image qui permettent au réparateur d'intervenir efficacement et uniquement là où la surface des semi-produits est effectivement défectueuse.

L'invention de la demande se rapporte à la detection de défauts sous la surface de demi-produits roulés à chaud et a l'enregistrement de cette information de manière que des réparations subséquentes puissent être effectuées à l'emplacement exact sur le produit.

Des techniques sont connues pour la détection de défauts de surface de produits coulés, voir par exemple BE-A-833 244, FR-A-2 381 304, US-A-4 219 844, US-A-4 247 306. Des techniques sont également connues pour la détection de défauts sous la surface. US-A-2 260 186 enseigne une méthode de détection des défauts sous la surface, selon laquelle on chauffe une surface de métal qu'on laisse ensuite refroidir. Les régions situées au-dessus des défauts sont chauffées à une température plus élevée et, lors du refroidissement, la couche d'oxyde ainsi formée présente un changement de couleur de surface localisé.

US-A-4 215 562 indique une méthode pour la détection des défauts de surface et des défauts sous la surface consistant en l'application d'une couche d'une produit chimique, le chauffage du métal par courants électromagnétiques et le refroidissement du produit. Les défauts sous la surface sont indiqués par un changement de couleur de la couche se trouvant sur les défauts.

Selon l'un des aspects de l'invention, il est prévu un procédé de détection et d'enregistrement des défauts situés au voisinage de la surface d'une masse métallique de semi-produits sidérurgiques chauds consistant à déplacer la surface à examiner sous un chalumeau à chasse d'oxygène caractérisé en ce que du metal fondu est chassé progressivement de sorte que le métal est enlevé localement afin d'exposer le métal situé en-dessous et que l'image du défaut situé au voisinage de la surface est saisie par une caméra et enregistrée à distance afin de permettre la réparation des défauts détectés.

La methode de l'invention offre l'avantage de pouvoir être utilisée avec des demi-produits de métal chauds et de permettre le contrôle des produits de métal d'une manière continue au fur et à mesure qu'ils émergent du coulage.

Ainsi, le procédé selon l'invention consiste, d'abord, à appliquer sur la surface à examiner la flamme d'un chalumeau à chasse d'oxygène et à déplacer son point d'application sur cette surface. Dans ces conditions, sous l'action initiale de la flamme, la surface du semi-produit est chauffée et portée à une température telle que, par la suite l'apport d'oxygène seul, du fait de l'exothermicité de sa réaction avec le fer, suffit pour former sur la surface au point d'application un bain de métal en fusion.

Sous l'effet de l'énergie cinétique de l'oxygène, le métal fondu est chassé progressivement de sorte que le métal est enlevé localement. Cet enlèvement étant fonction de la durée d'exposition de la surface à la flamme, la profondeur du bain pour un chalumeau donné, dépendra de sa vitesse de déplacement. Généralement, on se place dans les conditions qui permettent d'avoir une profondeur de bain, c'està-dire une épaisseur de métal enlevé de 1 à 2 mm.

Quand, au cours de ce déplacement à la surface du semi-produit, la flamme vient s'appliquer sur un défaut qui débouche à la surface, l'apport de chaleur, dû à l'oxydation du fer devient excessif en cet endroit du fait de la discontinuité dans la masse métallique et provoque alors une surchauffe locale du métal. Cette surchauffe se traduit par l'apparition d'une tache blanche qui se détache sur le fond du bain de couleur jaune.

On peut ainsi, par observation des taches blanches, avoir une indication très précise sur la présence de défauts à la surface des semiproduits. De plus, comme la surchauffe et par suite la tache subsiste tant qu'il y a discontinuité, on peut, en suivant la forme de la tache, être renseigné sur les dimensions du défaut et son orientation par rapport à la direction de la flamme. En outre, comme l'on travaille à vitesse constante de déplacement du chalumeau, et donc à profondeur constante de bain, si le défaut est plus profond que l'épaisseur de métal enlevé, la tache va persister et on a ainsi une indication de la profondeur des défauts.

Quand il s'agit de défauts qui ne débouchent pas à la surface du semi-produit, tels que des inclusions ou des soufflures par exemple, ce type de défauts est révélé après enlèvement du métal au moment où la discontinuité atteint la surface et se traduit également par l'apparition de taches blanches.

On dispose ainsi avec le chalumeau à chasse d'oxygène d'un moyen permettant non seulement une détection des défauts, mais encore la détermination de leur nature et de leurs dimensions en surface et en profondeur.

La plupart des chalumeaux connus, qu'ils soient ronds ou multiformes, peuvent être utilisés pour la détection.

Des adaptations simples sont seulement nécessaires dans certains cas.

Pour obtenir de bons résultats d'examen, on s'arrange généralement pour avoir sur le semiproduit des zones d'application du chalumeau ayant une surface de 300 à 500 mm² environ, l'axe du chalumeau étant incliné par rapport à la surface à examiner suivant un angle compris entre 5 et 15 degrés.

Quant à la vitesse de déplacement du chalumeau, elle est de préférence comprise entre 15 et 30 m/minute.

On peut également jouer sur le débit d'oxygène pour obtenir la profondeur de bain souhaité.

En raison de l'application du procédé à un semiproduit chaud dont le rayonnement thermique est important, il n'est pas possible à un homme de manipuler le chalumeau sur le lieu d'examen. C'est pourquoi, on le dispose généralement sur un portique placé au-dessus du semi-produit et on le commande à distance. Le déplacement du point d'application du chalumeau, par rapport à la surface à examiner peut être obtenu en déplaçant le portique ou au contraire en maintenant le portique fixe tandis que le semi-produit défile sous le chalumeau. Cette dernière façon de procéder peut être appliquée à des semi-produits prédécoupés placés sur un chemin de roulement, mais elle est particulièrement adaptée au traitement de semi-produits issus d'une coulée continue.

Comme les semi-produits peuvent avoir des largeurs de plusieurs mètres, et que la largeur de l'impact du chalumeau est au plus de 5 à 6 cm, on peut penser qu'il soit nécessaire de multiplier le nombre de chalumeaux ou d'assurer un balayage systématique de la surface à examiner avec un seul chalumeau pour obtenir une détection correcte. Il n'en est rien car des études statistiques ont montré que, d'une part, l'état inclusionnaire dépendait des conditions de coulée, d'autre part, les criques et défauts qui débouchent à la surface sont dus soit à la composition du semi-produit coulé, soit aux conditions de décalaminage, soit au redressement du semi-produit en cours de coulée, soit encore à des moyens d'accrochage mécaniques; autant de facteurs qui agissent de façon symétrique. En conséquence, il suffit généralement, pour un semi-produit de largeur relativement faible, de mettre en oeuvre un seul chalumeau et pour des semi-produits plus larges de disposer au maximum de trois chalumeaux dont deux sont placés près des rives et le troisième à mi-distance des rives.

Au cours du déplacement du semi-produit, le ou les points d'application du ou des chalumeaux, décrivent donc des droites parallèles à la direction longitudinale du semi-produit et ce dernier se trouve donc examiné uniquement le long des bandes longitudinales. Cet examen limité permet par extrapolation de reconstituer avec fidélité l'état de santé de la surface entière du semi-produit. Toutefois, lorsque la qualité du semi-produit l'exige, il est nécessaire de multiplier le nombre de bandes examinées. Ceci est facilement réalisé du fait que l'on peut déplacer le chalumeau à une vitesse 10 à 20 fois supérieure à celle de l'avance du semi-produit.

Pour les mêmes raisons de symétrie, l'examen du semi-produit se limite généralement à une seule face du demi-produit et qui est la face supérieure ou intrados dans le cas d'une coulée continue.

Cependant, outre le déplacement du ou des chalumeaux dû au mouvement du portique ou du semi-produit, le chalumeau peut être incliné différemment par rapport à la surface examinée suivant un angle dont il faut tenir compte dans l'interprétation du défaut. Le chalumeau est également animé d'un mouvement de balayage dans une direction transversale à la direction de son déplacement de manière à pouvoir déterminer la largeur des zones défectueuses.

Ce balayage, qui peut être obtenu par tout moyen connu de commande à distance, se fait non pas suivant une direction perpendiculaire à la direction de déplacement du portique ou du semi-produit, mais dans une direction oblique afin d'éviter la projection de métal en fusion sur les montants du portique.

Ce balayage oblique peut se faire de manière continue par déplacement alternatif du chalumeau d'un bout à l'autre de la largeur ou par séquences; chaque séquence étant séparée par des périodes où le chalumeau décrit une parallèle à l'axe du semi-produit; de cette manière, on obtient une succession de bandes longitudinales et obliques qui permettent un meilleur examen des semi-produits.

Les moyens de l'invention consistent également en une saisie de l'image de la surface donnée par le ou les chalumeaux et sa transmission à distance.

On a vu, en effet, que l'observation directe sur le lieu de détection des semi-produits était impossible en raison du rayonnement thermique des semi-produits. Il est donc nécessaire de transmettre l'image des défauts en un point éloigné de ce lieu.

Pour cela, on utilise une caméra vidéo ou CCD (à réseau matriciel de photodiodes) qui, généralement, est fixée sur le portique et dont l'objectif est centré sur le point d'application du chalumeau. Cette caméra transmet les images qu'elle saisit vers un écran de manière que l'opérateur puisse suivre l'apparition des taches blanches aussi aisément que s'il avait le semi-produit directement sous les yeux.

Ce genre de saisie et de retransmission à distance est largement connu. Mais ce qui en fait l'intérêt dans la présente invention, c'est la possibilité pour l'opérateur de continuer à jouer son rôle d'analyste de la nature, de la dimension, de la profondeur des défauts et de pouvoir ensuite fixer les consignes de réparation en parfaite connaissance de cause.

En effet, il ne s'agit pas ici d'images parasites ou plus ou moins fictives ou infidèles des semi-produits telles qu'elles peuvent être émises par les moyens de l'art antérieur, mais d'images réelles au sujet desquelles toute déformation due au système de détection lui-même est exclue.

Comme ces images sont fugaces, puisqu'elles évoluent en fonction de la position du chalumeau, il est nécessaire de les mémoriser. Pour cela, l'observateur établit au regard de l'écran une carte représentant la portion de surface examinée et sur laquelle il enregistre les défauts qu'il a détectés en précisant à la fois leur position, leurs dimensions ainsi que leur nature et leur profondeur qui peuvent être matérialisées à l'aide de signes conventionnels ou de couleurs différentes.

L'enregistrement peut être fait manuellement ou mieux par des moyens informatiques connus convenables.

Cette carte est alors donnée au réparateur qui l'introduit dans la mémoire d'un dispositif d'écriquage mécanisé automatique et la réparation du semi-produit s'effectue aussi efficacement que dans le cas antérieur où l'écriqueur était guidé visuellement par un marquage des endroits où il avait à intervenir.

L'invention enseigne donc des moyens simples de détection et d'enregistrement des défauts sur semi-produits sidérurgiques chauds qui permettent soit d'orienter ces derniers directement vers le laminage, soit vers la réparation soit vers le recyclage et en même temps de prévenir l'aciériste d'anomalies de coulée avant même que la séquence de coulée soit terminée.

L'invention peut être illustrée à l'aide de l'exemple d'application suivant:

Une brame en acier de dimensions 12 x 2,1 x 0,22 m ayant une température de 900°C a été placée à plat sous un portique se déplaçant à une vitesse de 20 m/minute. Sur ce portique était fixé un chalumeau de manière que le point d'application ait la forme d'une ellipse de grand axe 90 mm et de petit axe 50 mm et de profondeur 3 mm. Ce chalumeau a été déplacé parallèlement à la longueur de la brame, à la fois au centre et sur les rives.

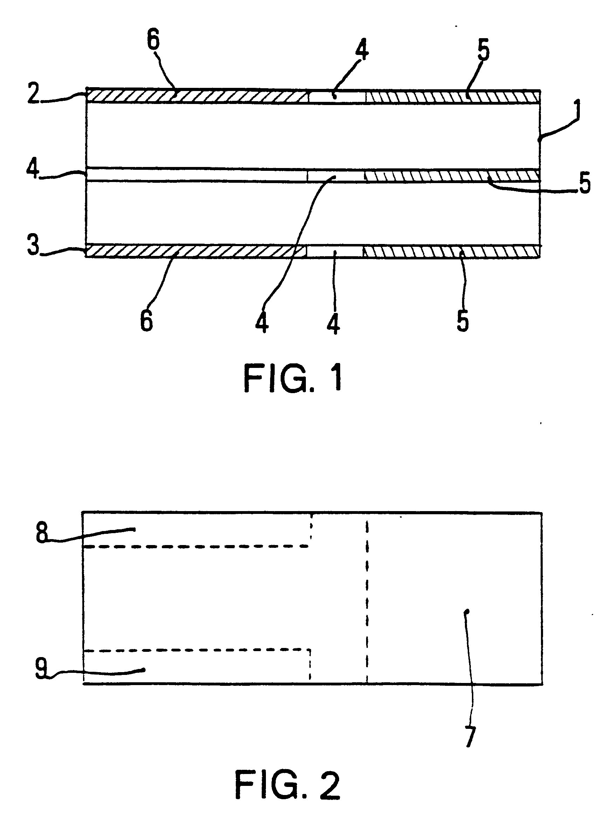

Les taches qui sont apparues lors de l'application des chalumeaux sur toute la longueur du semi-produit ont été saisis par une caméra vidéo du type Ultricom. Les images transmises vers un écran éloigné de 50 mètres du lieu de détection ont permis à un observateur d'enregistrer les défauts tels que représentés sur la figure 1 et d'établir la carte de réparation représentée sur la figure 2. Sur la figure 1 on voit l'image de la brame (1) sur laquelle on distingue les bandes longitudinales d'application du chalumeau les bandes de rive (2) et (3) et la bande centrale (4).

Sur chacune de ces bandes ont été observées des zones (4) sans défaut, des zones (5) avec inclusions et défauts de reprise de coulée, des zones (6) ayant des criques d'angle. Sur la figure 2 sont enregistrées la surface inclusionnaire (7) à réparer avec la rive correspondante et les surfaces (8) et (9) proches des rives où il faut éliminer les criques.

Cette carte a été utilisée par un écriqueur et lui a permis d'effectuer des réparations telles que le produit plat obtenu par laminage ne présentait aucun défaut.

**Revendications**

1. Procédé de détection et d'enregistrement des défauts situés au voisinage de la surface d'une masse métallique de semi-produits sidérurgiques chauds consistant à déplacer la surface à examiner sous un chalumeau à chasse d'oxygène caractérisé en ce que du métal fondu est chassé progressivement de sorte que le métal est enlevé localement afin d'exposer le métal situé endessous et que l'image du défaut situé au voisinage de la surface est saisie par une caméra et enregistrée à distance afin de permettre la réparation des défauts détectés.

2. Procédé selon la revendication 1, caractérisé en ce que la vitesse de déplacement du chalumeau est comprise entre 15 et 30 m/minute.

3. Procédé selon la revendication 1 ou 2, caractérisé en ce que le chalumeau a une zone d'application ayant une surface comprise entre 300 et 500 mm².

4. Procédé selon la revendication 1, 2 ou 3 caractérisé en ce que l'angle entre l'axe du chalumeau et le plan de la surface à examiner est compris entre 5 et 15 degrés.

5. Procédé selon n'importe laquelle des revendications précédentes caractérisé en ce que l'enlèvement du métal est effectué par un mouvement de balayage dans une direction transversale à son déplacement.

6. Procédé selon n'importe laquelle des revendications précédentes caractérisé en ce que la carte des défauts est préparée et introduite dans la mémoire d'un dispositif d'écriquage mécanisé automatique qui effectue la réparation des défauts situés au voisinage de la surface par écriquage.

**Patentansprüche**

1. Ein Verfahren zur Auffindung und Aufzeichnung von verdeckten Defekten in heißen, halbfertigen Eisen- oder Stahlprodukten, indem die zu untersuchende Fläche an einem sauerstoffgespeisten Flammstrahlbrenner vorbeigeführt wird, dadurch gekennzeichnet, daß das Flammstrahlen schrittweise durchgeführt wird, so daß die Metalloberfläche abgelöst wird, um das darunterliegende Metall freizulegen, und daß das Abbild der Unterschicht mit Hilfe einer Kamera erfaßt und an einer entfernt liegenden Stelle zwecks späterer Reparatur der erfaßten inneren Defekte aufgezeichnet wird.

2. Ein Verfahren wie unter Anspruch 1, dadurch gekennzeichnet, daß der Brenner mit einer Geschwindigkeit von 15 bis 30 m/Min. bewegt wird.

3. Ein Verfahren wie unter Anspruch 1 bzw. 2, dadurch gekennzeichnet, daß der Brenner etwa 300 bis 500 mm² der Oberfläche abdeckt.

4. Ein Verfahren wie unter Anspruch 1, 2 bzw. 3, dadurch gekennzeichnet, daß der Winkel zwischen Brennerachse und der Ebene der zu behandelnden Oberfläche zwischen 5 und 15° liegt.

5. Ein Verfahren wie unter den o.g. Ansprüchen, dadurch gekennzeichnet, daß das Flammstrahlen durch eine schweifende, quer zur Betriebsrichtung laufenden Bewegung erfolgt.

6. Ein Verfahren wie unter den vorangegangenen Ansprüchen, dadurch gekennzeichnet, daß von den Defekten ein Lageplan erstellt und dieser im Speicher eines mechanischen Flammstrahlautomaten gespeichert wird, der anschließend die inneren Defekte repariert.

**Claims**

1. A method for the detection and recording of subsurface defects in a hot semifinished iron or steel product by moving the surface under examination past an oxygen supplied scarfing torch, characterised in that the scarfing is performed progressively so that the metal surface is removed to expose the underlying metal and in that the visual indication of a subsurface defect is detected by a camera and recorded at a remote location for subsequent repair of the subsurface defects.

2. A method according to claim 1, characterised in that the torch is moved at a speed of between 15 and 30 m/min.

3. A method according to claim 1 or 2, characterised in that the torch has an application zone of approximately 300 to 500 mm$^2$ surface area.

4. A method according to claim 1, 2 or 3, characterised in that the angle between the axis of the torch and the plane of the surface to be treated lies between 5 and 15 degrees.

5. A method according to any preceding claim, characterised in that the scarfing is carried out by means of a sweeping movement transverse to the direction of its movement.

6. A method according to any preceding claim, characterised in that a map of the defects is prepared and stored in the memory of a mechanical automatic scarfing device which then repairs the subsurface defects by scarfing.

FIG. 1

FIG. 2